(19) Europäisches Patentamt / European Patent Office / Office européen des brevets

(11) **EP 2 735 458 B1**

(12) **EUROPEAN PATENT SPECIFICATION**

(45) Date of publication and mention
of the grant of the patent:
**18.11.2015 Bulletin 2015/47**

(51) Int Cl.:
$B60C\ 99/00^{(2006.01)}$ $B60C\ 11/03^{(2006.01)}$

(21) Application number: **13194168.4**

(22) Date of filing: **22.11.2013**

(54) **Method of determining the longitudinal pitch of tread band blocks**

Methode zur Bestimmung der Pitchlänge

Procédé de détermination de la longeur de blocs de bande de roulement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2012 IT RM20120588**

(43) Date of publication of application:
**28.05.2014 Bulletin 2014/22**

(73) Proprietor: **Bridgestone Corporation
Chuo-ku
Tokyo 104-8340 (JP)**

(72) Inventor: **Pieroni, Nicola
00142 Roma (IT)**

(74) Representative: **Maccagnan, Matteo et al
Studio Torta S.p.A.
Via Viotti, 9
10121 Torino (IT)**

(56) References cited:
**EP-A1- 2 335 949 EP-A1- 2 335 950
WO-A1-2012/164505**

## Description

TECHNICAL FIELD

The present invention relates to a method of determining the longitudinal pitch of tread band blocks.

BACKGROUND ART

Future tyre standards are expected to impose a maximum limit on the rolling noise produced by tyres. Which means technical solutions designed to reduce such noise are now a vital issue.

Patent Application WO2012164505 describes a method of determining a best longitudinal pitch of tread band blocks, by which to minimize, at a given tyre travelling speed, the noise produced by resonance generated inside the longitudinal grooves. This method, however, fails to provide for a significant reduction in the noise produced by the road surface impact/release sequence of the front and rear edges of the tread band blocks.

Documents EP2335949 and EP2335950 describe methods of determining the longitudinal block pitch of a tread band, with a raised pattern comprising a number of longitudinal and transverse grooves, on the basis of a reference speed, resonance frequency, and the tyre circumference.

DESCRIPTION OF THE INVENTION

It is an object of the present invention to provide a method of determining the longitudinal pitch of tread band blocks, which is cheap and easy to implement and, at the same time, provides for reducing pass-by noise by reducing the noise produced by the road surface impact/release sequence of the front and rear edges of the tread band blocks.

According to the present invention, there is provided a method of determining the longitudinal pitch of tread band blocks, as claimed in the accompanying Claims.

BRIEF DESCRIPTION OF THE DRAWINGS

A non-limiting embodiment of the present invention will be described by way of example with reference to the attached drawings, in which :

Figure 1 shows a schematic cross section of part of a tyre;
Figure 2 shows a schematic of part of the Figure 1 tyre tread band;
Figure 3 shows schematics of a tyre road surface impact sequence;
Figure 4 shows a schematic of a tyre footprint.

PREFERRED EMBODIMENTS OF THE INVENTION

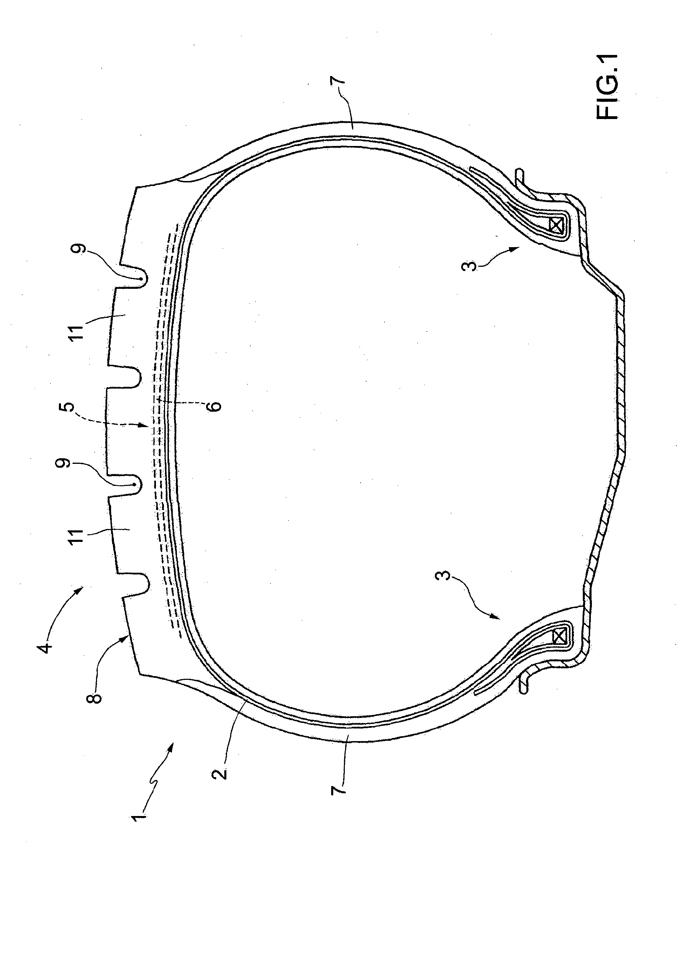

Number 1 in Figure 1 indicates as a whole a tyre comprising a toroidal body ply 2, which has two annular beads 3 and supports a tread band 4 made of cured-rubber-based material and forming the crown of tyre 1. A tread belt 5, comprising two tread plies 6, is interposed between body ply 2 and tread band 4. Each tread ply 6 comprises a strip of rubber, in which are embedded a number of cords (not shown) arranged side by side with a given pitch and inclined at a given angle with the equatorial plane of tyre 1.

Body ply 2 also supports two sidewalls 7 between tread band 4 and beads 3. Tread band 4 has a rolling surface 8, which externally bounds tread band 4 (i.e. is located radially outwards) and, in use, rests on the road surface.

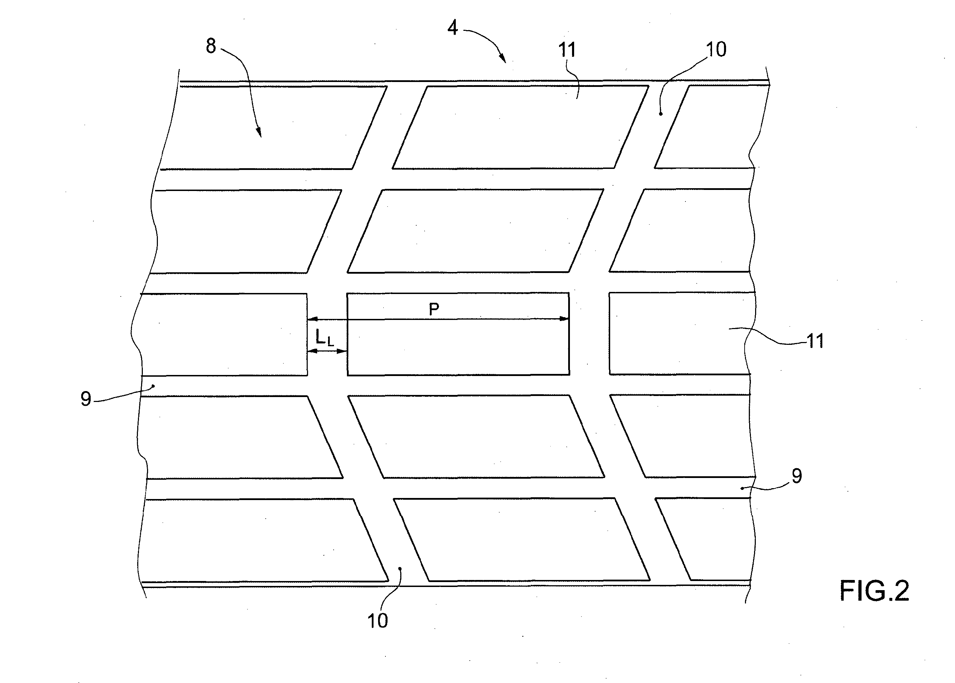

As shown in Figure 2, rolling surface 8 of tread band 4 has a raised pattern comprising a number of longitudinal or circumferential grooves 9 (i.e. extending crosswise to the axis of rotation, and along the circumference, of tyre 1), and a number of transverse grooves 10 (i.e. parallel to the axis of rotation of tyre 1 and perpendicular to longitudinal grooves 9). Longitudinal grooves 9 and transverse grooves 10 form five longitudinal rows of blocks 11 projecting radially upwards from tread band 4. Each block 11 is roughly parallelepiped-shaped with a rectangular or trapezoidal cross section, and is bounded laterally by respective grooves 9 and 10. Blocks 11 in each row are arranged with a longitudinal pitch P equal to the sum of the longitudinal dimension of each block 11, and the longitudinal dimension $L_1$ of an adjacent transverse groove 10.

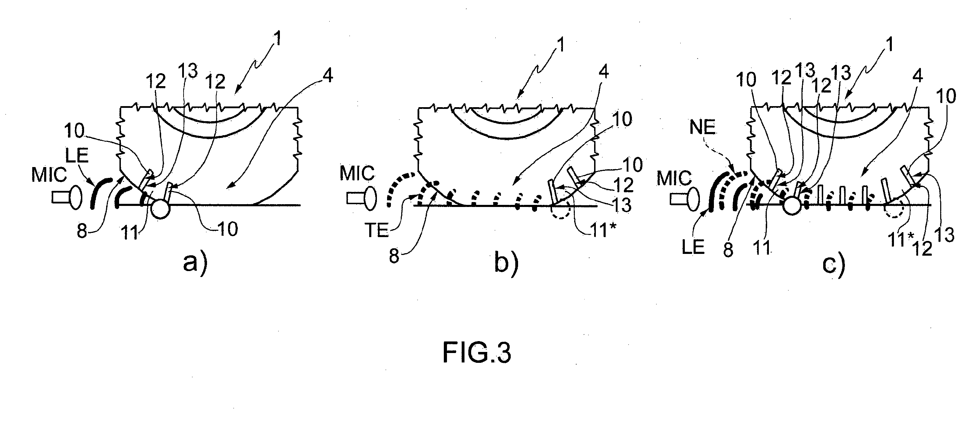

For the sake of simplicity, the Figure 3a-3c sequence shows a tyre 1 with a tread band 4 comprising a block 11 and a block 11*, each bounded at the front and rear, in the rolling direction, by two transverse grooves 10, and laterally by two longitudinal groves 9.

The road surface impact sequence of blocks 11 and 11* show two different noise sources that contribute to generating pass-by noise (i.e. the overall external noise of a vehicle influenced by the overall external noise of each tyre 1).

More specifically, the noise sources produced by the road surface impact sequence of blocks 11, 11* are the following :

1. fluctuations in pressure produced by the front (or leading) edge 12 of block 11 impacting the road surface, and which generate LE noise;
2. fluctuations in pressure produced by the rear (or trailing) edge 13 of block 11* releasing the road surface, and which generate TE noise.

It is important to note that the fluctuations in pressure causing LE noise also propagate inside longitudinal grooves 9 bounding block 11; and, likewise, the fluctuations in pressure causing TE noise also propagate inside longitudinal grooves 9 bounding block 11*.

LE noise commences the instant the front edge 12 of block 11 impacts the road surface, and the stress caused by front edge 12 of block 11 impacting the road surface is transmitted inside longitudinal grooves 9 bounding block 11; whereas TE noise commences the instant the rear edge 13 of block 11* releases the road surface, and the stress caused by rear edge 13 of block 11* releasing the road surface is transmitted inside longitudinal grooves 9 bounding block 11*.

In a preferred variation, the two LE and TE noises may be offset in time, i.e. may commence at different times. Alternatively, the two LE and TE noises may be simultaneous, i.e. the front edge 12 of block 11 impacts the road surface at the same instant rear edge 13 of block 11* releases the road surface.

The two LE and TE noises therefore overlap in time; which overlap may produce constructive interference, i.e. the intensities of the two LE and TE noises are added to each other, or destructive interference, i.e. the intensities of the two LE and TE noises are subtracted from each other.

Equation [1] below gives the emission frequency f of the road surface impact/release sequence of blocks 11, 11* of tread band 4 :

$$[1] \quad f = m * (V / P)$$

f       emission frequency of the road surface impact/release sequence of blocks 11, 11*;

m      whole number greater than zero (i.e. 1, 2, 3, 4, ......), which represents the sequence harmonic order in which the interference is applied;

P       longitudinal pitch of block 11, 11*, equal to the sum of the longitudinal dimension of each block 11, 11* and the longitudinal dimension $L_1$ of an adjacent transverse groove 10;

V       speed (linear) of tyre 1.

Assuming the longitudinal pitch P of block 11, 11* is constant, a variation in the linear speed V of tyre 1 obviously produces a variation in the emission frequency of the road surface impact/release sequence of blocks 11, 11*, and in the timing of the two LE and TE noises produced.

In other words, at certain linear speeds V of tyre 1, interference between the two LE and TE noises is totally constructive, so the contribution to pass-by noise (equal to the sum of the LE and TE noises) is maximum (i.e. has relative maximums); whereas, at other linear speeds V of tyre 1, interference between the two LE and TE noises is totally destructive, so the contribution to pass-by noise (equal to the sum of the LE and TE noises) is minimum (i.e. has relative minimums).

Equation [2] below, obtained experimentally, provides for determining when (i.e. at which speeds V of tyre 1) the relative minimums of the contribution to pass-by noise occur (i.e. when interference between the two LE and TE noises is totally destructive) :

$$[2] \quad f \left| \frac{L_0}{c} - \frac{\Delta P}{V} \right| = \frac{2k + 1}{2}$$

f       emission frequency of the road surface impact/release sequence of blocks 11, 11*;

k       whole number of zero or over (i.e. 0, 1, 2, 3, 4, ......);

V       linear speed of tyre 1;

c       speed of sound;

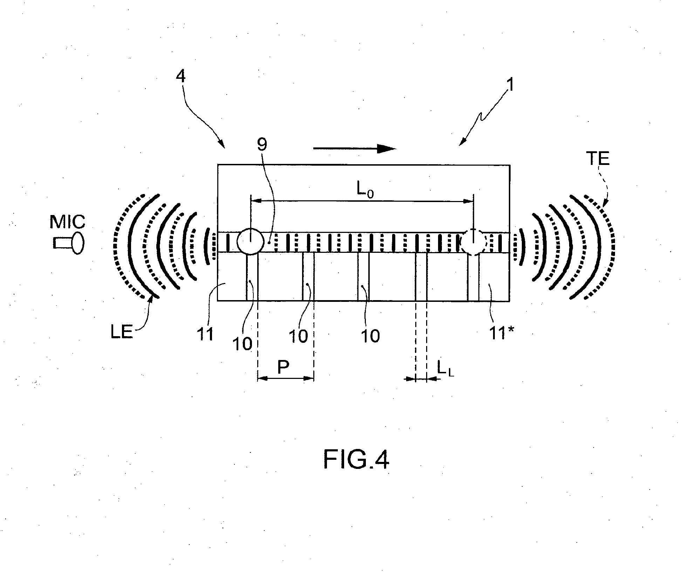

$L_0$      length of contact area of blocks 11, 11*, which, as shown clearly in Figure 4, equals the distance between the two sources of LE and TE noise;

P       longitudinal pitch of block 11, 11*, equal to the sum of the longitudinal dimension of each block 11, 11* and the longitudinal dimension $L_1$ of an adjacent transverse groove 10;

$\Delta P$     impact/release sequence geometric offset index of blocks 11, 11*.

The impact/release sequence geometric offset index of blocks 11, 11* can be calculated using equation [3] below :

$$[3] \quad \Delta P = (1 - r) \, P + L_1$$

$\Delta P$     impact/release sequence geometric offset index of blocks 11, 11*.

$L_1$      longitudinal dimension of transverse groove 10 bounding block 11, 11*,

P       longitudinal pitch of block 11, 11*, equal to the sum of the longitudinal dimension of each block 11, 11* and the longitudinal dimension $L_1$ of an adjacent transverse groove 10;

r       fraction coefficient.

Fraction coefficient r can be calculated using equation [4] below :

$$[4] \quad r = L_0 / P$$

$L_0$      length of contact area of blocks 11, 11*, which, as shown clearly in Figure 4, equals the distance between the two sources of LE and TE noise;

P       longitudinal pitch of block 11, 11*, equal to the sum of the longitudinal dimension of each block 11, 11* and the longitudinal dimension $L_1$ of an adjacent transverse groove 10.

Inserting equation [1], expressing the emission frequency f of the road surface impact/release sequence of blocks 11, 11*, into equation [2] gives equation [5] below :

$$[5] \quad m\frac{V}{P}\left|\frac{L_0}{c} - \frac{\Delta P}{V}\right| = \frac{2k+1}{2}$$

Assuming a constant m value of 1 in the impact/release sequence of blocks 11, 11*, equation [5] gives :

$$[6] \quad \frac{V}{P}\left|\frac{L_0}{c} - \frac{\Delta P}{V}\right| = \frac{2k+1}{2}$$

V   linear speed of tyre 1;
c   speed of sound;
$L_0$   length of contact area of blocks 11, 11*, which, as shown clearly in Figure 4, equals the distance between the two sources of LE and TE noise;
P   longitudinal pitch of block 11, 11*, equal to the sum of the longitudinal dimension of each block 11, 11* and the longitudinal dimension $L_1$ of an adjacent transverse groove 10;
$\Delta P$   impact/release sequence geometric offset index of blocks 11, 11*;
k   whole number greater than zero (i.e. 1, 2, 3, 4, ......).

The interference index I may now be defined as follows :

$$[7] \quad \frac{V}{P}\left|\frac{L_0}{c} - \frac{\Delta P}{V}\right| = I$$

V   linear speed of tyre 1;
c   speed of sound;
$L_0$   length of contact area of blocks 11, 11*, which, as shown clearly in Figure 4, equals the distance between the two sources of LE and TE noise;
P   longitudinal pitch of block 11, 11*, equal to the sum of the longitudinal dimension of each block 11, 11* and the longitudinal dimension $L_1$ of an adjacent transverse groove 10;
$\Delta P$   impact/release sequence geometric offset index of blocks 11, 11*;
I   interference index.

Simply substituting equation [7] in equation [6] gives :

$$[8] \quad I = \frac{2k+1}{2}$$

Tests show it preferable to assign constant k the lowest (i.e. zero) value, to obtain an interference index I value of 0.5 in equation [8].
Equation [5] and assigning constant k the lowest (i.e. zero) value, to obtain an interference index I value of 0.5, give equation [9] by which to determine the best longitudinal pitch $P_b$ of block 11, 11* to minimize the contribution to pass-by noise :

$$[9] \quad P_b = 2m\left|\frac{L_0 V}{c} - \Delta P\right|$$

Pb   best longitudinal pitch of block 11;
m   whole number greater than zero (i.e. 1, 2, 3, 4, .........);
$L_0$   length of contact area of blocks 11, 11*, which, as shown clearly in Figure 4, equals the distance between the two sources of LE and TE noise;
V   linear speed of tyre 1;
c   speed of sound;
$\Delta P$   impact/release sequence geometric offset index of blocks 11, 11*.

Equation [9] above may therefore be used to determine the best longitudinal pitch $P_b$ of blocks 11, 11* of tyre 1 to minimize the contribution to pass-by noise at (i.e. when tyre 1 is travelling at) a target linear speed V.
In other words, to minimize the contribution of the tyre to pass-by noise when tyre 1 is travelling at a target linear speed V, this can be done using the above equation [9] to determine the best longitudinal pitch $P_b$ of blocks 11, 11* of tyre 1.
Once the best longitudinal pitch $P_b$ of blocks 11, 11* of tyre 1 is determined using the above equation [9], tyre 1 may be produced in two ways : with a constant longitudinal pitch (i.e. blocks 11, 11* all have the same longitudinal pitch P equal to the best longitudinal pitch $P_b$), or with a varying longitudinal pitch (i.e. blocks 11, 11* have different longitudinal pitches P concentrated about the best longitudinal pitch $P_b$).
A constant longitudinal pitch of blocks 11, 11* (i.e. blocks 11, 11* all have the same longitudinal pitch P equal to the best longitudinal pitch $P_b$) has the advantage of a very small (minimum possible) contribution to pass-by noise at target speed V, but the disadvantage of the contribution to pass-by noise increasingly significantly at other than target speed V. A constant longitudinal pitch of blocks 11, 11* is normally used on TBR (Truck and Bus Radial) tyres mounted on vehicles that travel for long periods at the same cruising speed (typically long-distance trucks and buses using mainly motorways and therefore mostly travelling at the maximum motorway speed limit). In this case, tyre 1 may be designed to minimize the contribution to pass-by noise at a target speed V equal to the motorway speed limit of the relative vehicle (granted, tyre 1 will be proportionally noisier at low speeds, but overall noise at low speed is still very low.

A varying longitudinal pitch (i.e. blocks 11, 11* have different longitudinal pitches P concentrated about the best longitudinal pitch $P_b$) obviously has the disadvantage of not altogether minimizing pass-by noise at target speed V, but has the advantage of also reducing the contribution to pass-by noise at other than target speed V. In other words, compared with the same tyre 1 with a constant longitudinal pitch, tyre 1 with a varying longitudinal pitch waives part of the reduction in pass-by noise at target speed V in favour of also reducing pass-by noise at other than target speed V. A variable longitudinal pitch of blocks 11, 11* is normally used on car tyres, in that cars are normally driven over a very wide speed range (at least up to 130 km/h) and, above all, at widely varying speeds, which therefore makes it difficult to determine one single target speed V to favour over the others (unlike long-distance motorway trucks and tour buses).

In the case of a varying longitudinal pitch, blocks 11, 11* have different longitudinal pitches P concentrated about the best longitudinal pitch $P_b$, i.e. within the longitudinal pitches P as a whole, the best longitudinal pitch $P_b$ predominates. For example, longitudinal pitches P as a whole may form a Gaussian curve centred about the best longitudinal pitch $P_b$, or, in the case of a very long best longitudinal pitch $P_b$, may form an asymmetric Gaussian curve largely favouring longitudinal pitches P smaller than best longitudinal pitch $P_b$ (which nevertheless still remains predominant). One particular asymmetric Gaussian curve is represented by a half Gaussian curve with the upper (maximum) limit at best longitudinal pitch $P_b$ (i.e. best longitudinal pitch $P_b$ is the predominant and maximum value within longitudinal pitches P as a whole). In other words, because a very long longitudinal pitch P of blocks 11 may pose other than noise (e.g. water-purging) problems, longitudinal pitch P of blocks 11 is preferably kept within and no longer than best longitudinal pitch $P_b$. In a preferred varying-pitch embodiment, best longitudinal pitch $P_b$ constitutes at least 40-60% of longitudinal pitches P of tyre 1 (i.e. 40-60% of longitudinal pitches P equal best longitudinal pitch $P_b$, and the other 60-40% differ from best longitudinal pitch $P_b$).

In a preferred varying-pitch embodiment, a minimum longitudinal pitch $P_{min}$ and maximum longitudinal pitch $P_{max}$ defining the range of longitudinal pitches P is determined on the basis of a minimum speed $V_{min}$ and maximum speed $V_{max}$ defining a target speed range (obviously containing target speed V) within which to reduce the contribution to pass-by noise.

In a preferred embodiment employing equations identical to equation [9] above, minimum longitudinal pitch $P_{min}$ and maximum longitudinal pitch $P_{max}$ are determined using equations [10] and [11] below :

$$[9] \quad P_b = 2m\left|\frac{L_0 V}{c} - \Delta P\right|$$

$$[10] \quad P_{min} = 2m\left|\frac{L_0 V_{min}}{c} - \Delta P\right|$$

$$[11] \quad P_{max} = 2m\left|\frac{L_0 V_{max}}{c} - \Delta P\right|$$

$P_b$    best longitudinal pitch of block 11;

m    whole number greater than zero (i.e. 1, 2, 3, 4, ......); obviously, the chosen constant m value must be consistent, i.e. must be the same for all three equations [9], [10] and [11];

$L_0$    length of contact area of blocks 11, 11*, which, as shown clearly in Figure 4, equals the distance between the two sources of LE and TE noise;

V    linear speed of tyre 1;

c    speed of sound;

ΔP    impact/release sequence geometric offset index of blocks 11, 11*;

$P_{min}$    minimum longitudinal pitch of blocks 11, 11*;

$V_{min}$    minimum speed of tyre 1;

$P_{max}$    maximum longitudinal pitch of blocks 11, 11*;

$V_{max}$    maximum speed of tyre 1.

For example, with a target speed V of 80 km/h, maximum speed $V_{max}$ may equal 90 km/h, and minimum speed $V_{min}$ 70km/h. Obviously, the minimum speed $V_{min}$ to maximum speed $V_{max}$ range must not be too wide, otherwise the longitudinal pitch P range would be wide enough to also include considerable positive LE and TE noise interference.

Using equations [10] and [11] to determine minimum longitudinal pitch $P_{min}$ and maximum longitudinal pitch $P_{max}$ ensures the absence of positive LE and TE noise interference, provided the minimum speed $V_{min}$ to maximum speed $V_{max}$ range is not too wide; consequently, the minimum longitudinal pitch $P_{min}$ to maximum longitudinal pitch $P_{max}$ range is smaller. Alternatively, when using equations [10] and [11] to determine minimum longitudinal pitch $P_{min}$ and maximum longitudinal pitch $P_{max}$, a small amount of positive LE and TE noise interference may be allowed using a wider minimum speed $V_{min}$ to maximum speed $V_{max}$ range; consequently, the minimum longitudinal pitch $P_{min}$ to maximum longitudinal pitch $P_{max}$ range is larger.

The above method of determining the longitudinal pitch P of blocks 11, 11* (using equation [9]) substantially considers (i.e. minimizes) the noise generated by the road surface impact/release sequence of front and rear edges 12, 13 of blocks 11, 11*. In other words, the above method of determining the longitudinal pitch P of blocks 11, 11* (using equation [9]) provides for minimizing the noise generated by the road surface impact/release sequence of front and rear edges 12, 13 of blocks 11, 11* at a given travelling speed V of tyre 1.

In one possible embodiment, the above method of determining the longitudinal pitch P of blocks 11, 11* may be used together with the method of determining the longitudinal pitch P of blocks 11, 11* described in Italian Patent Application T02011A000471 and included herein by way of reference.

The method of determining the longitudinal pitch P of blocks 11, 11* described in Patent Application T02011A000471 (and using equation [12]) substantially considers (i.e. minimizes) the noise produced by resonance generated inside longitudinal grooves 9. In other words, the method of determining the longitudinal pitch P of blocks 11, 11* described in Patent Application T02011A000471 (and using equation [12]) provides for minimizing the noise produced by resonance generated inside longitudinal grooves 9 at a given travelling V speed of tyre 1.

As described in Italian Patent Application T02011A000471, a best longitudinal pitch $P_b$' of blocks 11, 11* can be determined using the equation below :

$$[12] \quad Pb' = \frac{V}{fp} \cdot \left( \frac{2k+1}{2} \right)$$

$P_b$'    best longitudinal pitch of blocks 11, 11*;
V        target speed of tyre 1;
fp      resonance frequency of longitudinal grooves 9;
k        whole number greater than zero.

Once best longitudinal pitch $P_b$ using equation [9] is determined, best longitudinal pitch $P_b$' using equation [12] can also be determined to check whether the equation [9] and [12] longitudinal pitches $P_b$ and $P_b$' match.

In other words, a check can be made to determine a match (or substantial match) between best longitudinal pitch $P_b$ of blocks 11, 11*, which substantially minimizes the noise produced by the road surface impact/release sequence of front and rear edges 12 and 13 of blocks 11, 11*, and best longitudinal pitch $P_b$', which minimizes the noise produced by resonance generated inside longitudinal grooves 9.

A substantial match between best longitudinal pitch $P_b$ and best longitudinal pitch $P_b$' is the best (most favourable) outcome that can occur, by providing one target longitudinal pitch $P_b$* that satisfies both equations [9] and [12] at the same time.

In the event of no match (or substantial match) between best longitudinal pitch $P_b$ and best longitudinal pitch $P_b$', a choice must be made whether to minimize the noise produced by the road surface impact/release sequence of front and rear edges 12 and 13 of blocks 11, 11* (using the equation [9] best longitudinal pitch $P_b$), or the noise produced by resonance generated inside longitudinal grooves 9 (using the equation [12] best longitudinal pitch $P_b$').

The method described of determining the longitudinal pitch P of blocks 11 of tread band 4 has numerous advantages, by enabling the longitudinal pitch P of blocks 11, 11* to be sized in such a manner as to significantly reduce the contribution to pass-by noise at (or, rather, around) a target speed V. What is more, sizing the longitudinal pitch P of blocks 11, 11* as in the method described has no negative side effects whatsoever.

## Claims

1. A method of determining the longitudinal pitch (P) of blocks (11, 11*) of a tread band (4) having a raised pattern comprising a number of longitudinal grooves (9) and transverse grooves (10); the method comprising the step of calculating a first best longitudinal pitch ($P_b$) of the blocks (11, 11*), to minimize pass-by noise at a target speed (V), using the equation:

$$[9] \quad P_b = 2m \left| \frac{L_0 V}{c} - \Delta P \right|$$

$P_b$ first best longitudinal pitch of the blocks (11, 11*) ;
m whole number greater than zero (i.e. 1, 2, 3, 4, ......);
$L_0$ length of contact area of the blocks (11, 11*);
V target linear speed of the tyre (1);
c speed of sound;
$\Delta P$ impact/release sequence geometric offset index of the blocks (11, 11*).

2. A method as claimed in Claim 1, wherein the impact/release sequence geometric offset index ($\Delta P$) of the blocks (11, 11*) is calculated using the equation:

$$[3] \quad \Delta P = (1 - r) \, P + L_1$$

$\Delta P$ impact/release sequence geometric offset index of the blocks (11, 11*);
$L_1$ longitudinal dimension of a transverse groove (10) bounding each block (11, 11*);
P longitudinal pitch of each block (11, 11*), equal to the sum of the longitudinal dimension of each block (11, 11*) and the longitudinal dimension of a transverse groove (10) bounding the block (11, 11*);
r fraction coefficient.

3. A method as claimed in Claim 2, wherein the fraction coefficient (r) can be calculated using the following equation [4]:

$$[4] \quad r = L_0 \, / \, P$$

$L_0$ length of contact area of the blocks (11, 11*);
P longitudinal pitch of each block (11, 11*), equal to the sum of the longitudinal dimension of each block (11, 11*) and the longitudinal dimension of a transverse groove (10) bounding the block (11, 11*).

4.  A method as claimed in Claim 1, 2 or 3, wherein the longitudinal pitch (P) of the blocks (11, 11*) is constant, and equals the first best longitudinal pitch ($P_b$) along the whole of the tread band (4).

5.  A method as claimed in Claim 1, 2 or 3, wherein the longitudinal pitch (P) of the blocks (11, 11*) varies along the whole of the tread band (4), so that the blocks (11, 11*) have different longitudinal pitches (P) concentrated about the first best longitudinal pitch ($P_b$).

6.  A method as claimed in Claim 5, wherein, within the longitudinal pitches (P) as a whole, the first best longitudinal pitch ($P_b$) predominates.

7.  A method as claimed in Claim 5 or 6, wherein the first best longitudinal pitch ($P_b$) constitutes at least 40-60% of the longitudinal pitches (P) of the tyre (1).

8.  A method as claimed in Claim 5, 6 or 7, wherein the longitudinal pitches (P) as a whole form a Gaussian curve centred about the first best longitudinal pitch ($P_b$), or an asymmetric Gaussian curve containing the first best longitudinal pitch ($P_b$).

9.  A method as claimed in one of Claims 5 to 8, and comprising the further step of determining a minimum longitudinal pitch ($P_{min}$) and maximum longitudinal pitch ($P_{max}$) defining a longitudinal pitch (P) range, as a function of a minimum speed ($V_{min}$) and maximum speed ($V_{max}$) defining a speed range containing the target speed (V).

10. A method as claimed in Claim 9, and comprising the further step of calculating the minimum longitudinal pitch ($P_{min}$) and maximum longitudinal pitch ($P_{max}$) using the following equations:

$$[10] \quad P_{min} = 2m \left| \frac{L_0 V_{min}}{c} - \Delta P \right|$$

$$[11] \quad P_{max} = 2m \left| \frac{L_0 V_{max}}{c} - \Delta P \right|$$

m whole number greater than zero (i.e. 1, 2, 3, 4, ......) and the same for both equations [10] and [11];
$L_0$ length of contact area of the blocks (11, 11*);
c speed of sound;
$\Delta P$ impact/release sequence geometric offset index of the blocks (11, 11*);
$P_{min}$ minimum longitudinal pitch of the blocks (11, 11*);
$V_{min}$ minimum speed of the tyre (1);
$P_{max}$ maximum longitudinal pitch of the blocks (11, 11*);
$V_{max}$ maximum speed of the tyre (1).

11. A method as claimed in one of the foregoing Claims, and comprising the further steps of:

calculating a second best longitudinal pitch ($P_b$') of the blocks (11, 11*), to minimize pass-by noise at the target speed (V), using the equation:

$$[13] \quad Pb' = \frac{V}{fp} \cdot \left( \frac{2k+1}{2} \right)$$

$P_b$' second best longitudinal pitch of the blocks (11,11*);
V target speed of the tyre (1);
fp resonance frequency of the longitudinal grooves (9);
k whole number greater than zero; comparing the first best longitudinal pitch ($P_b$) of

the blocks (11, 11*) with the second best longitudinal pitch ($P_b$') of the blocks (11, 11*); and determining the longitudinal pitch (P) of the blocks (11, 11*) as a function of the comparison between the first best longitudinal pitch ($P_b$) of the blocks (11, 11*) and the second best longitudinal pitch ($P_b$') of the blocks (11, 11*).

**Patentansprüche**

1.  Verfahren zum Bestimmen des länglichen Abstands (P) von Blöcken (11, 11*) eines Reifenprofils (4), welches ein angehobenes Muster aufweist, welches eine Anzahl an länglichen Rillen (9) und querlaufenden Rillen (10) umfasst; das Verfahren umfassend den Schritt einer Berechnung eines ersten besten länglichen Abstands ($P_b$) der Blöcke (11, 11*), um ein Vorbeifahrgeräusch bei einer Zielgeschwindigkeit (V) zu minimieren unter Verwendung der Gleichung:

$$[9] \quad P_b = 2m \left| \frac{L_0 V}{c} - \Delta P \right|$$

$P_b$ erster bester länglicher Abstand der Blöcke (11,11*);
m Ganzzahl größer Null (d.h. 1, 2, 3, 4 ...);
$L_0$ Länge der Kontaktfläche der Blöcke (11, 11*);
V lineare Zielgeschwindigkeit der Reifen (1);
c Schallgeschwindigkeit;
$\Delta P$ Einwirkungs-/Freigabesequenz-Geometrie-Offset-Index der Blöcke (11, 11*).

2. Verfahren nach Anspruch 1, wobei der Einwirkungs-/Freigabesequenz-Geometrie-Offset-Index ($\Delta P$) der Blöcke (11, 11*) berechnet wird unter Verwendung der Gleichung:

$$[3] \quad \Delta P = (1 - r)\, P + L_1.$$

$\Delta P$ Einwirkungs-/Freigabesequenz-Geometrie-Offset-Index der Blöcke (11, 11*);
$L_1$ längliche Dimension einer querlaufenden Rille (10), welche jeden Block (11, 11*) begrenzt.
P länglicher Abstand jedes Blockes (11, 11*), welcher gleich ist zu der Summe der länglichen Dimension jedes Blockes (11, 11*) und der länglichen Dimension einer querlaufenden Rille (10), welche den Block (11, 11*) begrenzt;
r Bruchkoeffizient

3. Verfahren nach Anspruch 2, wobei der Bruchkoeffizient (r) berechnet werden kann unter Verwendung der folgenden Gleichung [4]:

$$[4] \quad r = L_0 / P$$

$L_0$ Länge der Kontaktfläche der Blöcke (11, 11*);
P länglicher Abstand jedes Blockes (11, 11*), welcher gleich ist zu der Summe der länglichen Dimension jedes Blockes (11, 11*) und der länglichen Dimension einer querlaufenden Rille (10), welche den Block (11, 11*) begrenzt;

4. Verfahren nach Anspruch 1, 2 oder 3, wobei der längliche Abstand (P) der Blöcke (11, 11*) konstant ist und gleich dem ersten besten länglichen Abstand ($P_b$) entlang des gesamten Reifenprofils (4) ist.

5. Verfahren nach einem der Ansprüche 1, 2 oder 3, wobei der längliche Abstand (P) der Blöcke (11, 11*) entlang des gesamten Profils (4) variiert, so dass die Blöcke (11, 11*) unterschiedliche längliche Abstände (P) aufweisen, welche um den ersten besten länglichen Abstand ($P_b$) konzentriert sind.

6. Verfahren nach Anspruch 5, wobei innerhalb der länglichen Abstände (P) als Ganzes der erste beste längliche Abstand ($P_b$) überwiegt.

7. Verfahren nach Anspruch 5 oder 6, wobei der erste beste längliche Abstand ($P_b$) zumindest 40 bis 60 % des länglichen Abstandes (P) des Reifens (1) darstellt.

8. Verfahren nach Anspruch 5, 6 oder 7, wobei die länglichen Abstände (P) als Ganzes eine Gaußsche Kurve bilden, welche um den ersten besten länglichen Abstand ($P_b$) zentriert ist oder eine asymmetrische Gaußsche Kurve bilden, welche den ersten besten länglichen Abstand ($P_b$) beinhaltet.

9. Verfahren nach irgendeinem der Ansprüche 5 bis 8 und umfassend den weiteren Schritt einer Bestimmung eines minimalen länglichen Abstands ($P_{min}$) und eines maximalen länglichen Abstand ($P_{max}$), welche einen länglichen Abstands-(P)-Bereich als eine Funktion einer minimalen Geschwindigkeit ($V_{min}$) und einer maximalen Geschwindigkeit ($V_{max}$) definieren, welche einen Geschwindigkeitsbereich definieren, welcher die Zielgeschwindigkeit (V) enthält.

10. Verfahren nach Anspruch 9 und umfassend den weiteren Schritt einer Berechnung des minimalen länglichen Abstands ($P_{min}$) und des maximalen länglichen Abstand ($P_{max}$), unter Verwendung der folgenden Gleichungen:

$$[10] \quad P_{min} = 2m \left| \frac{L_0 V_{min}}{c} - \Delta P \right|$$

$$[11] \quad P_{max} = 2m \left| \frac{L_0 V_{max}}{c} - \Delta P \right|$$

m Ganzzahl größer Null (d.h. 1, 2, 3, 4, ...) und dieselbe für beide Gleichungen [10] und [11];
$L_0$ Länge der Kontaktfläche der Blöcke (11, 11*);
c Schallgeschwindigkeit;
$\Delta P$ Einwirkungs-/Freigabesequenz-Geometrie-

Offset-Index der Blöcke (11, 11*);
$P_{min}$ minimaler länglicher Abstand der Blöcke (11, 11*);
$V_{min}$ minimale Geschwindigkeit des Reifens (1);
$P_{max}$ maximaler länglicher Abstand der Blöcke (11, 11*);
$V_{max}$ maximale Geschwindigkeit des Reifens (1).

11. Verfahren nach irgendeinem der vorangegangenen Ansprüche und umfassend die weiteren Schritte zum:

Berechnen eines zweiten besten länglichen Abstands ($P_b$') der Blöcke (11, 11*), um ein Vorbeifahrgeräusch bei der Zielgeschwindigkeit (V) zu minimieren unter Verwendung der Gleichung:

$$[13] \quad Pb' = \frac{V}{fp} \cdot \left(\frac{2k+1}{2}\right)$$

$P_b$' zweiter bester länglicher Abstand der Blöcke (11, 11*);
V die Geschwindigkeit des Reifens (1);
fp Resonanzfrequenz der länglichen Rillen (9);
k Ganzzahl größer Null;

Vergleichen des ersten besten länglichen Abstands ($P_b$) der Blöcke (11, 11*) mit dem zweiten besten länglichen Abstand ($P_b$') der Blöcke (11, 11*); und
Bestimmen des länglichen Abstands (P) der Blöcke (11, 11*) als eine Funktion des Vergleichs zwischen des ersten besten länglichen Abstands ($P_b$) der Blöcke (11, 11*) und des zweiten besten länglichen Abstands ($P_b$') der Blöcke (11, 11*).

**Revendications**

1. Procédé de détermination du pas longitudinal (P) des blocs (11, 11*) d'une bande de roulement (4) comportant un motif en relief comprenant un nombre de rainures longitudinales (9) et de rainures transversales (10) ; le procédé comprenant l'étape de calcul d'un premier meilleur pas longitudinal ($P_b$) des blocs (11, 11*), pour réduire à un minimum le bruit au passage à une vitesse cible (V), en utilisant l'équation :

$$[9] \quad P_b = 2m\left|\frac{L_0 V}{c} - \Delta P\right|$$

$P_b$, premier meilleur pas longitudinal des blocs (11, 11*) ;
m : nombre entier supérieur à zéro (c'est-à-dire 1, 2, 3, 4, ...) ;
$L_0$ : longueur de la zone de contact des blocs (11, 11*) ;
V : vitesse linéaire cible du pneu (1) ;
c : vitesse du son ;
$\Delta P$ : indice de décalage géométrique de séquence d'impact/ séparation des blocs (11, 11*).

2. Procédé selon la revendication 1, dans lequel l'indice de décalage géométrique de séquence d'impact/ séparation ($\Delta P$) des blocs (11, 11*) est calculé en utilisant l'équation :

$$[3] \quad \Delta P = (1 - r) P + L_1$$

$\Delta P$ : indice de décalage géométrique de séquence d'impact/ séparation des blocs (11, 11*) ;
$L_1$ : dimension longitudinale d'une rainure transversale (10) délimitant chaque bloc (11, 11*) ;
P : pas longitudinal de chaque bloc (11, 11*), égal à la somme de la dimension longitudinale de chaque bloc (11, 11*) et de la dimension longitudinale d'une rainure transversale (10) délimitant le bloc (11, 11*) ;
r : coefficient de fraction.

3. Procédé selon la revendication 2, dans lequel le coefficient de fraction (r) peut être calculé en utilisant l'équation [4] suivante :

$$[4] \quad r = L_0 / P$$

$L_0$ : longueur de zone de contact des blocs (11, 11*) ;
P : pas longitudinal de chaque bloc (11, 11*), égal à la somme de la dimension longitudinale de chaque bloc (11, 11*) et de la dimension longitudinale d'une rainure transversale (10) délimitant le bloc (11, 11*).

4. Procédé selon la revendication 1, 2 ou 3, dans lequel le pas longitudinal (P) des blocs (11, 11*) est constant, et est égal au premier meilleur pas longitudinal ($P_b$) le long de la bande de roulement (4) entière.

5. Procédé selon la revendication 1, 2 ou 3, dans lequel le pas longitudinal (P) des blocs (11, 11*) varie le long de la bande de roulement (4) entière, de sorte que les blocs (11, 11*) ont différents pas longitudinaux (P) concentrés autour du premier meilleur pas longitudinal ($P_b$).

6. Procédé selon la revendication 5, dans lequel, dans les pas longitudinaux (P) dans leur ensemble, le premier meilleur pas longitudinal ($P_b$) prédomine.

7. Procédé selon la revendication 5 ou 6, dans lequel le premier meilleur pas longitudinal ($P_b$) constitue au moins 40 à 60 % des pas longitudinaux (P) du pneu (1).

8. Procédé selon la revendication 5, 6 ou 7, dans lequel les pas longitudinaux (P) dans leur ensemble forment une courbe gaussienne centrée autour du premier meilleur pas longitudinal ($P_b$), ou une courbe gaussienne asymétrique contenant le premier meilleur pas longitudinal ($P_b$).

9. Procédé selon l'une des revendications 5 à 8, et comprenant l'étape supplémentaire de détermination d'un pas longitudinal minimum ($P_{min}$) et d'un pas longitudinal maximum ($P_{max}$) définissant une plage de pas longitudinal (P), en fonction d'une vitesse minimum ($V_{min}$) et d'une vitesse maximum ($V_{max}$) définissant une plage de vitesse contenant la vitesse cible (V).

10. Procédé selon la revendication 9, et comprenant l'étape supplémentaire de calcul du pas longitudinal minimum ($P_{min}$) et du pas longitudinal maximum ($P_{max}$) en utilisant les équations suivantes :

$$[10] \quad P_{min} = 2m\left|\frac{L_0 V_{min}}{c} - \Delta P\right|$$

$$[11] \quad P_{max} = 2m\left|\frac{L_0 V_{max}}{c} - \Delta P\right|$$

m : nombre entier supérieur à zéro (c'est-à-dire 1, 2, 3, 4, ...) et le même pour les deux équations [10] et [11] ;

$L_0$ : longueur de la zone de contact des blocs (11, 11*) ;

c : vitesse du son ;

$\Delta P$ : indice de décalage géométrique de séquence d'impact/ séparation des blocs (11, 11*) ;

$P_{min}$ : pas longitudinal minimum des blocs (11, 11*) ;

$V_{min}$ : vitesse minimum du pneu (1) ;

$P_{max}$ : pas longitudinal maximum des blocs (11, 11*) ;

$V_{max}$ : vitesse maximum du pneu (1).

11. Procédé selon l'une des revendications précédentes, et comprenant les étapes supplémentaires :

de calcul d'un deuxième meilleur pas longitudinal ($P_b'$) des blocs (11, 11*), pour réduire à un minimum un bruit au passage à la vitesse cible (V), en utilisant l'équation :

$$[13] \quad Pb' = \frac{V}{fp} \cdot \left(\frac{2k+1}{2}\right)$$

$P_b'$ : deuxième meilleur pas longitudinal des blocs (11, 11*) ;
V : vitesse cible du pneu (1) ;
$f_p$ : fréquence de résonance des rainures longitudinales (9) ;
k : nombre entier supérieur à zéro ;

de comparaison du premier meilleur pas longitudinal ($P_b$) des blocs (11, 11*) avec le deuxième meilleur pas longitudinal ($P_b'$) des blocs (11, 11*) ; et

de détermination du pas longitudinal (P) des blocs (11, 11*) en fonction de la comparaison entre le premier meilleur pas longitudinal ($P_b$) des blocs (11, 11*) et le deuxième meilleur pas longitudinal ($P_b'$) des blocs (11, 11*).

FIG.1

EP 2 735 458 B1

FIG.2

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012164505 A
- EP 2335949 A
- EP 2335950 A
- IT T02011000471 A